# EUROPÄISCHE PATENTSCHRIFT

(11) **EP 3 573 910 B1**
(45) Veröffentlichungstag und Bekanntmachung des Hinweises auf die Patenterteilung: **29.12.2021**
(21) Anmeldenummer: 17784895.9
(22) Anmeldetag: 02.10.2017
(51) Int. Cl.: B65G 54/02

(54) **BEHÄLTERBEHANDLUNGSANLAGE UND VERFAHREN ZUM TRANSPORT VON FUNKTIONSELEMENTEN IN EINER BEHÄLTERBEHANDLUNGSANLAGE ZUM BEHANDELN VON BEHÄLTERN**
CONTAINER-HANDLING INSTALLATION AND METHOD FOR CONVEYING FUNCTIONAL ELEMENTS IN A CONTAINER-HANDLING INSTALLATION FOR THE PURPOSE OF HANDLING CONTAINERS
INSTALLATION DE TRAITEMENT DE CONTENANTS ET PROCÉDÉ DE TRANSPORT D'ÉLÉMENTS FONCTIONNELS DANS UNE INSTALLATION DE TRAITEMENT DE CONTENANTS DESTINÉE À TRAITER DES CONTENANTS

(30) Priorität: 24.01.2017 DE 102017101331
(43) Veröffentlichungstag der Anmeldung: 04.12.2019
(73) Patentinhaber: Krones AG, 93073 Neutraubling (DE)
(72) Erfinder: NEUBAUER, Michael, 93073 Neutraubling (DE)
(74) Vertreter: Schuhbießer, Irmgard Gertrud
(86) Internationale Anmeldenummer: PCT/EP2017/075017
(87) Internationale Veröffentlichungsnummer: WO 2018/137797

(56) Entgegenhaltungen:
- EP-A1- 2 610 189
- DE-A1-102011 007 280
- JP-B2- 5 995 042
- US-B1- 6 334 523

## Beschreibung

Die vorliegende Erfindung bezieht sich auf eine Behälterbehandlungsanlage und ein Verfahren zum Transport von Funktionselementen in einer Behälterbehandlungsanlage zum Behandeln von Behältern, wie beispielsweise Transportieren von Behältern, Auswerfen von Behältern aus einer Halte- und/oder Transportvorrichtung; Greifen von Etiketten für Behälter, Etikettieren von Behältern, usw.

Behälterbehandlungsanlagen, wie beispielsweise in der JP 5995042 B2 gezeigt, dienen zum Behandeln von Behältern, wie Flaschen, Dosen, usw., um die Behälter in Bezug auf eine Aufnahme eines Produkts, wie beispielsweise eines Getränks, eines Reinigungsmittels, eines Kosmetikprodukts, eines Stückguts, wie ein Tuch, Stäben, usw. vorzubereiten und/oder in Verpackungseinheiten zu verpacken.

In der Behälterbehandlungsanlage kommen rotierende Maschinenkomponenten zum Einsatz, die verschiedene Tätigkeiten verrichten. Eine solche Maschinenkomponente kann beispielsweise ein Transferstern zum Transport von Behältern sein oder ein Greiferzylinder zum Transport von Etiketten in Kaltleimaggregaten und Aggregaten für eine Rundum-Etikettierung von der Rolle. Bei derartigen Maschinenkomponenten sind die Funktionselemente zum Behandeln der Behälter oder Etiketten, usw. meist starr auf einer rotierenden Scheibe oder einem rotierenden Zylinder befestigt. Durch die starre Anordnung ist die Teilung oder der Abstand zwischen den Funktionselementen nicht veränderbar. Daher kann die Produktion nur mit begrenzter Flexibilität erfolgen.

Um diesen Nachteil zu beseitigen, wurde bei der Anmelderin überlegt, einen kreisförmigen Langstator-Linearmotor zu verwenden, auf dem mehrere Transportelemente oder Wagen oder Mover laufen. Auf diesen Transportelementen sind die Funktionselemente befestigt. Auf diese Weise ist es möglich, während eines Umlaufs der Transportelemente auf dem Langstator verschiedene Geschwindigkeiten und Teilungen zu realisieren. Außerdem kann gegebenenfalls ein Wechsel eines Greiferzylinders bei Umrüstung auf einen anderen Behälter entfallen, da die Ansteuerung der Transportelemente für jeden zu verarbeitenden Behälter oder jedes zu verarbeitende Etikett angepasst werden kann.

Nachteilig an einem solchen Konzept ist, dass jedes Transportelement mit mehreren Rollen pro Transportelement separat gelagert werden muss, um eine stabile und sichere Führung des Transportelements an dem Langstator zu ermöglichen. Problematisch an einer derartigen Ausführung ist, dass die Rollen aufgrund der hohen Laufleistung einem hohen Verschleiß unterliegen. Daraus ergibt sich ein sehr hoher Wartungsaufwand und demzufolge hohe Kosten. Noch dazu wird eine Schiene zur präzisen Führung der Transportelemente benötigt, was weitere Kosten verursacht.

Ein weiteres Problem besteht darin, dass für die Transportelemente relativ filigrane Rollen zum Einsatz kommen. Dies ist aufgrund von hohen Normalkräften zwischen Transportelement und Langstator teilweise kritisch.

JP 5995042 B2 zeigt eine Behälterbehandlungsanlage, bei der für ein Transportelement ein Arm vorgesehen ist, um ein Funktionselement zu halten. JP 5995042 B2 offenbart die Merkmale der Oberbegriffe der Ansprüche 1 und 15.

US 6,334,523 B1 zeigt eine Komponententransporteinrichtung, bei der zwei Arme an einer gemeinsamen Welle angeordnet sind, wobei jeder der Arme mit einem anderen Transportelement 11, 12 gekoppelt ist.

Daher ist es Aufgabe der vorliegenden Erfindung, eine Behälterbehandlungsanlage und ein Verfahren zum Transport von Funktionselementen in einer Behälterbehandlungsanlage zum Behandeln von Behältern bereitzustellen, mit welcher die zuvor genannten Probleme gelöst werden können. Insbesondere sollen eine Behälterbehandlungsanlage und ein Verfahren zum Transport von Funktionselementen in einer Behälterbehandlungsanlage zum Behandeln von Behältern bereitgestellt werden, bei welchen Funktionselemente an einer rotierenden Maschinenkomponente mit hoher Flexibilität für verschiedene Produktionsaufgaben präzise steuerbar sind sowie kostengünstig in der Herstellung und im Betrieb bewegbar sind.

Diese Aufgabe wird durch eine Behälterbehandlungsanlage nach Anspruch 1 gelöst. Die Behälterbehandlungsanlage hat mindestens zwei Transportelemente, die jeweils mindestens ein Funktionselement aufweisen, das für ein Behandeln von Behältern vorgesehen ist, eine Transportbahn zum Transport der mindestens zwei Transportelemente nacheinander und unabhängig voneinander entlang der Transportbahn und mittels entlang der Transportbahn angeordneten Transportbahn-Magnetkrafteinheiten, die zumindest teilweise separat ansteuerbar sind, um mit mindestens einer Magnetkrafteinheit des jeweiligen Transportelements zusammenzuwirken, und einer Lagereinheit für jedes Transportelement zum Lagern des Transportelements derart, dass die mindestens zwei Transportelemente an einer gemeinsamen Welle gelagert sind, wie in Anspruch 1 beschrieben.

Die Behälterbehandlungsanlage ist vorteilhaft derart ausgestaltet, dass die Transportelemente durch deren kontaktlose Lagerung an der Transportbahn einem geringen Verschleiß unterliegen. Zudem können die Transportelemente je nach Bedarf und präzise an die gewünschten Positionen, insbesondere Stationen für eine Ausführung einer Funktion mit dem Funktionselement, an der Transportbahn gesteuert werden. Damit ist die Behälterbehandlungsanlage sehr flexibel auf die jeweiligen Produktionsanforderungen einstellbar oder daran anpassbar.

Noch dazu hat die Kombination aus Transportelementen mit Magnetkrafteinheiten für die Funktionselemente und den Transportbahn-Magnetkrafteinheiten einen sehr einfachen Aufbau, der nur wenige einfache Teile umfasst. Dadurch sind die Herstellkosten für die Behälterbehandlungsanlage vergleichsweise gering. Außerdem ist die Wartung in deutlich größeren Zeitabständen als bei dem Stand der Technik erforderlich, was die Wartungskosten gegenüber dem Stand der Technik deutlich senkt.

Noch dazu werden durch den Wegfall der Rollen an den Magnetkrafteinheiten die Probleme aufgrund der hohen Normalkräfte zwischen Transportelement und Stator gelöst.

Infolgedessen trägt die beschriebene Konfiguration der Behälterbehandlungsanlage dazu bei, die Umrüstzeit oder Wartung der Behälterbehandlungsanlage oder der einzelnen Behälterbehandlungsmaschine so einfach und schnell wie möglich zu gestalten. Dadurch wird auch ein Beitrag dazu geleistet, durch die Konfiguration der Behälterbehandlungsanlage bedingte Stillstände und Produktionsausfälle zu minimieren.

Vorteilhafte weitere Ausgestaltungen der Behälterbehandlungsanlage sind in den abhängigen Ansprüchen angegeben.

Möglicherweise weist die Behälterbehandlungsanlage zudem die Welle zur Aufnahme der Lagereinheiten für alle Transportelemente auf. Zusätzlich oder alternativ ist die Transportbahn kreisförmig oder bogenförmig ausgestaltet und die Lagereinheiten für die mindestens zwei Transportelemente sind im Zentrum der Transportbahn an der Welle angeordnet. Zusätzlich oder alternativ weist die Lagereinheit ein Wälzlager und/oder ein Gleitlager und/oder Magnetlager auf.

Es ist auch denkbar, dass die mindestens zwei Transportelemente mit der Lagereinheit kontaktlos an der Transportbahn angeordnet sind. Zusätzlich oder alternativ ist jedes Transportelement der Transportbahn an mindestens zwei Seiten kontaktlos zugewandt.

Jedes Transportelement ist mit einem ersten Arm und einem zweiten Arm gekoppelt, an deren freiem Ende jeweils ein Teil der Lagereinheit des Transportelements angeordnet ist, wie in Anspruch 1 beschrieben. Hierbei ist es vorzuziehen, dass die Arme beabstandet voneinander angeordnet sind, so dass alle ersten Arme für die mindestens zwei Transportelemente an dem freien Ende des ersten Arms in einer Reihe benachbart zueinander an der Welle angeordnet sind.

In einer Ausgestaltung kann die Transportbahn als Transportbahn-Magnetkrafteinheiten eine Vielzahl von Spulen aufweisen, die einzeln ansteuerbar sind. Zusätzlich oder alternativ ist zudem eine Steuereinrichtung vorgesehen zum Steuern einer Bewegung von mindestens einem Transportelement entlang der Transportbahn mit einer Geschwindigkeit, die zumindest teilweise verschieden von einer Geschwindigkeit des mindestens einen anderen Transportelements ist.

Gemäß verschiedenen Ausführungsbeispielen weist die Magnetkrafteinheit des Transportelements ein erstes Magnetkraftelement und ein zweites Magnetkraftelement auf, wobei das erste Magnetkraftelement zum Transport des Transportelements entlang der Transportbahn mit mindestens einer Transportbahn-Magnetkrafteinheit zusammenwirkt, und wobei das zweite Magnetkraftelement unabhängig von dem ersten Magnetkraftelement zum Bewegen eines Funktionselements oder eines Hebels des Transportelements mit mindestens einer weiteren Transportbahn-Magnetkrafteinheit zusammenwirkt, um eine Betätigung des Funktionselements oder des Hebels zu bewirken. Hierbei kann das erste Magnetkraftelement mindestens einen Permanentmagneten oder magnetisierbares Material aufweisen, und das zweite Magnetkraftelement kann mindestens einen Permanentmagneten oder magnetisierbares Material aufweisen.

Möglicherweise ist der Hebel schwenkbar an dem Transportelement gehalten und mit dem Funktionselement an dem Transportelement verbunden. Zusätzlich oder alternativ ist der Hebel in Transportrichtung nacheilend oder voreilend zu dem Transportelement angeordnet. Zusätzlich oder alternativ ist der Hebel derart geformt, dass der Hebel von einem weiteren Transportelement aufnehmbar ist, das an der Transportbahn benachbart zu dem Transportelement angeordnet ist.

Gemäß einem Ausführungsbeispiel weist das Transportelement eine Aussparung auf, die in einer Richtung quer zur Transportrichtung in etwa in der Mitte des Transportelements angeordnet ist. Optional weist das Transportelement einen Piezo-Motor auf, der durch Wechselwirkung mit mindestens einer Transportbahn-Magnetkrafteinheit elektrische Energie für ein Funktionselement bereitstellt.

Es ist möglich, dass die Transportbahn und die mindestens zwei Transportelemente Teil einer Transporteinrichtung und/oder einer Blasmaschine und/oder einer Ausstattungsmaschine und/oder einer Füllmaschine und/oder einer Inspektionseinheit und/oder einer Markiereinheit und/oder einer Verpackungsmaschine und/oder einer Zuführeinheit für Stückgut wie Vorformlinge oder Verschlüsse sind.

Die zuvor genannte Aufgabe wird zudem durch ein Verfahren zum Transport von Funktionselementen in einer Behälterbehandlungsanlage zum Behandeln von Behältern nach Anspruch 15 gelöst. Bei dem Verfahren werden mindestens zwei Transportelemente, die jeweils mindestens ein Funktionselement aufweisen, das für ein Behandeln von Behältern vorgesehen ist, nacheinander und unabhängig voneinander entlang der Transportbahn mittels entlang der Transportbahn angeordneten Transportbahn-Magnetkrafteinheiten transportiert werden, die zumindest teilweise separat ansteuerbar sind, um mit einer Magnetkrafteinheit des jeweiligen Transportelements zusammenzuwirken, wobei jedes Transportelement mit einer Lagereinheit derart gelagert wird, dass die mindestens zwei Transportelemente an einer gemeinsamen Welle gelagert werden, wie in Anspruch 15 beschrieben.

Weitere mögliche Implementierungen der Erfindung umfassen auch nicht explizit genannte Kombinationen von zuvor oder im Folgenden bezüglich des Ausführungsbeispiels beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand eines Ausführungsbeispiels näher beschrieben. Es zeigen:
Fig. 1 eine vereinfachte schematische Draufsicht auf eine Behälterbehandlungsanlage zur Behandlung von Behältern;
Fig. 2 eine dreidimensionale Ansicht eines Motors für die Behälterbehandlungsanlage gemäß einem ersten Ausführungsbeispiel;
Fig. 3 einen Schnitt durch den Motor für die Behälterbehandlungsanlage gemäß dem ersten Ausführungsbeispiel;
Fig. 4 eine Draufsicht auf einen Teil eines Motors mit einem Transportelement gemäß einem zweiten Ausführungsbeispiel;
Fig. 5 eine Draufsicht auf drei Varianten für eine Form des Transportelements gemäß dem zweiten Ausführungsbeispiel;
Fig. 6 eine Draufsicht auf eine vierte Variante für eine Form des Transportelements gemäß dem zweiten Ausführungsbeispiel;
Fig. 7 bis Fig. 9 jeweils verschiedene Draufsichten auf einen Teil eines Motors mit einem Transportelement gemäß einem dritten Ausführungsbeispiel;
Fig. 10 eine Draufsicht auf einen Teil einer Motoranordnung mit einem Transportelement gemäß einem vierten Ausführungsbeispiel; und
Fig. 11 eine Draufsicht auf einen Teil eines Motors mit einem Transportelement gemäß einem fünften Ausführungsbeispiel.

In den Figuren sind gleiche oder funktionsgleiche Elemente, sofern nichts Anderes angegeben ist, mit denselben Bezugszeichen versehen.

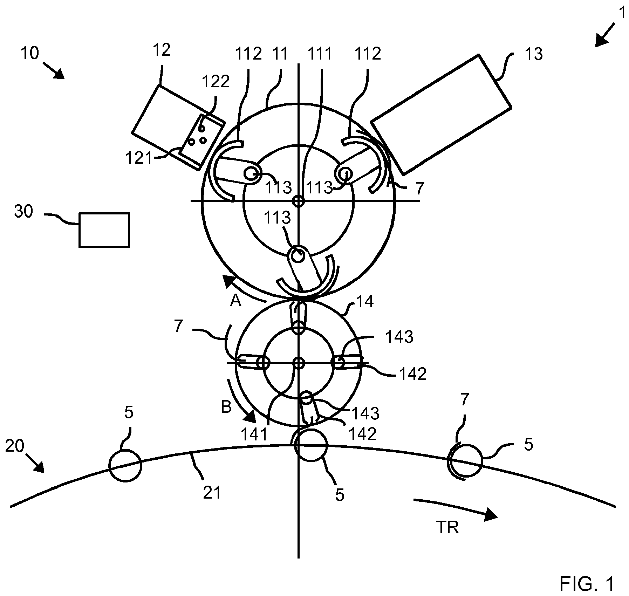

Fig. 1 zeigt sehr schematisch eine Behälterbehandlungsanlage 1 zum Behandeln von Behältern 5, nämlich in dem gezeigten speziellen Beispiel zum Transportieren der Behälter 5 und Anbringen eines Etiketts 7 an den Behältern 5 oder Etikettieren der Behälter 5. Hierfür hat die Behälterbehandlungsanlage 1 eine Etikettiermaschine 10, 20 mit einem Etikettieraggregat 10 zum Anbringen des Etiketts 7 und einer Transporteinrichtung 20 zum Transport der Behälter 5 zu dem Etikettieraggregat10 und der mit dem Etikett 7 versehenen oder etikettierten Behälter 5 weg von dem Etikettieraggergat 10. Die Behälterbehandlungsanlage 1 wird mit mindestens einer Steuereinrichtung 30 gesteuert, die in Fig. 1 nur sehr schematisch gezeigt ist. Die Behälter 5 können Flaschen, Dosen, Pakete, usw. sein. Außerdem kann das Material des Behälters 2 frei gewählt werden, wie beispielsweise Glas, Kunststoff, Aluminium, etc.

Das Etikettieraggregat 10 hat ein Palettenkarussell 11, eine Beleimungseinrichtung 12, eine Etikettenbereitstelleinrichtung 13 und einen Greiferzylinder 14.

Das Palettenkarussell 11 ist um eine Palettenkarussellachse 111 in einer Rotationsrichtung A rotierbar oder drehbar. An dem Palettenkarussell 11 sind eine Vielzahl von Paletten 112 angeordnet, welche derart mit dem Palettenkarussell 11 gekoppelt sind, dass die Paletten 112 mit dem Palettenkarussell 11 in der ersten Rotationsrichtung A rotieren. Die Paletten 112 können dabei zusätzlich zu der Rotation oder Drehung in die Rotationsrichtung A zumindest teilweise um eine Palettenachse 113 rotieren bzw. oszillieren oder hin und her geschwenkt werden, an der die Paletten 112 an dem Palettenkarussell 11 gelagert sind. Außen an dem Palettenkarussell 11 sind die Beleimungseinrichtung 12, die eine Leimwalze 121 zum Aufbringen von Leim 122 auf die Paletten 112 aufweist, sowie die Etikettenbereitstelleinrichtung 13 in dieser Reihenfolge in der Rotationsrichtung A nacheinander angeordnet.

Im Etikettierbetrieb werden die Paletten 112 durch eine Rotation des Palettenkarussells 11 um seine Achse 111 an der Beleimungseinrichtung 12 vorbeibewegt und dabei von der Beleimungseinrichtung 12 mit Leim 122 beaufschlagt. Anschließend werden die Paletten 112 durch die Rotationsbewegung des Palettenkarussells 11 in der ersten Rotationsrichtung A zu der Etikettenbereitstelleinrichtung 13 bewegt, an welcher das Etikett 7 an die beleimte Palette 112 übergeben wird. Die Etiketten 7 werden dabei durch den auf der Palette 112 aufgebrachten Leim 122 aus der Etikettenbereitstelleinrichtung 13 entnommen und mit dem Palettenkarussell 11 weiter in die erste Rotationsrichtung A bis zum Greiferzylinder 14 bewegt. Die Etikettenbereitstelleinrichtung 13 dient sowohl als Speicher als auch zur Übergabe des jeweiligen Etiketts 7 an eine der Paletten 112.

Nach der Etikettenbereitstelleinrichtung 13 werden die mit dem Etikett 7 beaufschlagten Paletten 112 an dem Greiferzylinder 14 vorbeibewegt. Der Greiferzylinder 14 ist ebenfalls an dem Palettenkarussell 11 angeordnet. Auch der Greiferzylinder 14 ist rotierbar, und zwar um eine Greiferzylinderachse 141 in einer zweiten Rotationsrichtung B. Hierbei bewegen sich das Palettenkarussell 11 und der Greiferzylinder 14 an der Stelle, an der sie einander zugewandt sind, in die gleiche Richtung.

An dem Greiferzylinder 14 sind bei dem gezeigten Beispiel vier Greifer 142 angeordnet. Die Greifer 142 sind derart mit dem Greiferzylinder 14 gekoppelt, dass die Greifer 142 mit dem Greiferzylinder 14 in die zweite Rotationsrichtung B rotieren können. Jeder Greifer 142 kann dabei zusätzlich zu der Drehung oder Rotation in die Rotationsrichtung B zumindest teilweise um eine Greiferachse 143 rotieren oder bewegt werden, an welcher der Greifer 142 an dem Greiferzylinder 14 gelagert ist. Die Bewegung um die Greiferachse 143 bewirkt ein Öffnen oder Schließen des Greifers 142, um ein Etikett 7 zu greifen oder loszulassen bzw. freizugeben.

Durch die Bewegung der Transporteinrichtung 20 in die Transportrichtung TR entlang einer Transportbahn 21, werden die Behälter 5 am Greiferzylinder 14 vorbeibewegt. Hierbei werden die Etiketten 7 durch die Greifer 142 von der Palette 112 entnommen und durch die Rotationsbewegung des Greiferzylinders 14 in die zweite Rotationsrichtung B bewegt und anschließend an einen von der Transporteinrichtung 20 transportierten Behälter 5 übergeben. Bei der Entnahme des Etiketts 7 von der Palette 112 durch den Greifer 142, bleibt der Leim 122, welcher in einem vorherigen Schritt auf die Palette 112 aufgetragen wurde, an dem Etikett 7 haften. Außerdem bewegen sich der Greiferzylinder 14 und die Transporteinrichtung 20 an der Stelle, an der sie einander zugewandt sind, in der gleichen Richtung, wie in Fig. 1 veranschaulicht. Dadurch werden die Behälter 5 mit den Etiketten 7 versehen oder etikettiert.

Auch wenn dies in Fig. 1 nicht gezeigt ist, kann die Behälterbehandlungsanlage 1 weitere Maschinen zum Behandeln der Behälter 5 aufweisen, wie beispielsweise eine Blasmaschine zum Herstellen von Kunststoffflaschen als Behälter 5 aus Preformen, eine Füllmaschine zum Füllen eines Produkts in die Behälter 5, eine Inspektionsmaschine oder -einheit zum Inspizieren der Behälter 5 auf Fehler, eine Markiermaschine oder -einheit zum Markieren mindestens eines Teils der Behälter 5 mit einer vorbestimmten Markierung, eine Verpackungsmaschine zum Verpacken der Behälter in vorbestimmte Verpackungen, wie beispielsweise Gebinde oder Kästen. Es sind beliebige Kombinationen oder Anordnungen der Maschinen möglich. Es sind selbstverständlich auch andere Maschinen zum Behandeln der Behälter 5 oder eine beliebige Anzahl der zuvor genannten Maschinen einsetzbar.

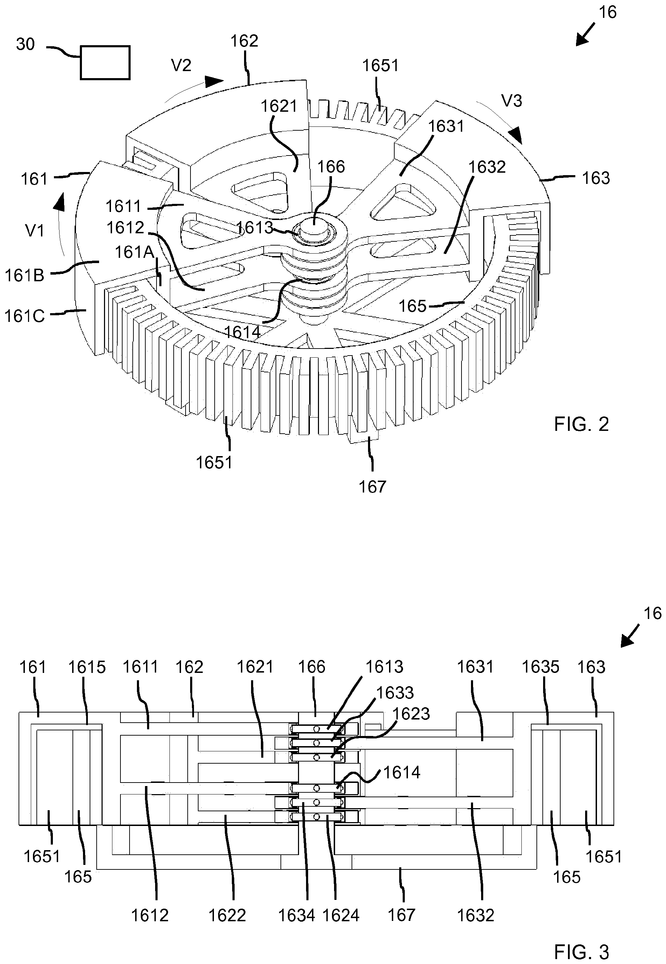

Fig. 2 zeigt einen Motor 16, der zum Bewegen von Funktionselementen, wie den Greifern 142 am Greiferzylinder 14 oder der Paletten 112 am Palettenkarussell 11 oder von Behältergreifern der Transporteinrichtung 20 entlang der Transportbahn 21, usw. ausgestaltet ist. Die Behältergreifer können insbesondere Vakuumsauger sein oder Neckhandlingklammern oder Klammern sein, die zum Greifen der Behälter 5, wie beispielsweise Flaschen, z. B. an deren Hals oder Körper dienen. Die Transporteinrichtung 20 kann insbesondere ein Teilungsverzugsstern sein, der zwischen zwei Maschinen angeordnet ist, insbesondere der Blasmaschine und der Füllmaschine oder der Füllmaschine und der Etikettiermaschine 10, 20 oder der Blasmaschine und der Etikettiermaschine 10, 20, oder der Teilungsverzugsstern kann innerhalb einer Maschine eingebaut werden z.B. bei einer Streckblasmaschine zwischen Heizmodul und Blasmodul usw. Die Etikettiermaschine 10, 20 kann in allen genannten Fällen zusätzlich oder alternativ eine Druckmaschine aufweisen oder sein. Außerdem kann die Transporteinrichtung 20 als Teilungsverzugsstern zwischen den genannten Maschinen und einer Inspektionseinheit oder einer Markiereinheit angeordnet sein.

Wie nachfolgend beschrieben, ist der Motor 16 ausgestaltet, eine Veränderung des Abstandes oder der Teilung zwischen Behältern 5 zu realisieren, weil die Behälterbehandlungsanlage 1 beispielsweise zwischen anderen Produkten, wie insbesondere verschieden großen Behältern 5, Etiketten 7, usw. umgestellt werden soll. Somit kann der Motor 16 überall dort zum Einsatz kommen, wo es sinnvoll ist, eine kreisförmige Bewegung, mit wechselnden Geschwindigkeiten und Abständen oder Teilungen auszuführen. Es kann jedoch auch möglich sein, dass eine Bewegung entlang insbesondere einer Ellipse oder nur teilweise entlang eines Bogensegments, dem beispielsweise eine geradlinige Transportbahn folgt, usw., ausgeführt wird.

Hierfür hat der Motor 16 von Fig. 2 ein erstes Transportelement 161, ein zweites Transportelement 162, ein drittes Transportelement 163, die die Rotoren des Motors 16 bilden. Zudem hat der Motor 16 eine Transportbahn 165 mit einer Vielzahl von einzeln ansteuerbaren Transportbahn-Magnetkrafteinheiten 1651 als Stator oder Primärteil des Motors 16. Die Transportbahn 165 ist um eine Welle 166 des Motors 16 herum angeordnet. Die Transportbahn 165 wird von einem Gestell 167 gestützt. Das Gestell 167 kann auch die Welle 166 stützen/lagern.

An dem ersten bis dritten Transportelement 161, 162, 163 können jeweils mindestens eins der Funktionselemente, wie die Greifer 142 am Greiferzylinder 14 oder die Paletten 112 am Palettenkarussell 11 oder Behältergreifer der Transporteinrichtung 20 starr oder auch bewegbar, wie zuvor beschrieben, angeordnet sein. Das erste bis dritte Transportelement 161, 162, 163 bilden als Rotoren die Sekundärteile des Motors 16.

Die Transportbahn 165 ist insbesondere ein Eisenkern mit Zähnen, wie in Fig. 2 gezeigt. Hierbei wird die Transportbahn 165, die äquivalent zu dem Weg/Verlauf der Transportelemente 161, 162, 163 geformt ist, durch die Lagerung über die Welle 166 vorgegeben. Anders ausgedrückt, der Stator des Motors 16 folgt dem Weg/Verlauf der Transportelemente 161, 162, 163.

Die Transportbahn-Magnetkrafteinheiten 1651 sind als einzelne Zähne an der Transportbahn 165 ausgestaltet. Die Transportbahn-Magnetkrafteinheiten 1651 sind insbesondere um die Zähne des Eisenkerns der Transportbahn 165 gewickelte Spulen. Der Eisenkern kann aus ferromagnetischem Material bestehen. Auch wenn sich an allen Zähnen des Eisenkerns die Wicklungen der Spulen befinden können, kann auch nur jeder n-te Zahn mit einer Spule ausgestattet sein, wobei n eine natürliche Zahl größer 1 ist. Die Spulen können unter Steuerung durch die Steuereinrichtung 30 einzeln von einem elektrischen Strom durchflossen werden, wodurch in den Spulen eine Magnetkraft induziert wird, die auf die Transportelemente 161 bis 163 wirkt. Somit sind die Spulen einzeln oder zumindest teilweise separat oder einzeln ansteuerbar, um mit einer Magnetkrafteinheit des jeweiligen Transportelements 161, 162, 163 zusammenzuwirken.

Die Transportbahn 165 bildet einen gebogenen Stator des Motors 16. Bei dem in Fig. 2 gezeigten speziellen Beispiel bildet die Transportbahn 165 einen Kreis, aus dem die Transportbahn-Magnetkrafteinheiten 1651 nach außen auskragen. Das erste bis dritte Transportelement 161 bis 163 sind unabhängig voneinander relativ zu der Transportbahn 165 bewegbar, indem die Spulen unter dem jeweiligen Transportelement 161 bis 163 entsprechend angesteuert werden, um die zuvor genannte Magnetkraft zu erzeugen. Hierfür sind das erste bis dritte Transportelement 161 bis 163 zumindest teilweise als Magnetkrafteinheit ausgebildet. Die Magnetkrafteinheit des ersten bis dritten Transportelements 161 bis 163 kann beispielsweise als mindestens ein Permanentmagnet oder magnetisierbares Material ausgebildet sein. Alternativ kann jedoch auch mindestens eine Magnetkrafteinheit des ersten bis dritten Transportelements 161 bis 163 ebenfalls als Spule ausgebildet sein.

Dadurch kann sich das erste Transportelement 161 mit einer ersten Geschwindigkeit V1 an der Transportbahn 165 bewegen, wobei ein Pfeil die Transportrichtung als Beispiel angibt. Das zweite Transportelement 162 kann sich mit einer zweiten Geschwindigkeit V2 an der Transportbahn 165 bewegen, wobei ein Pfeil die Transportrichtung als Beispiel angibt. Das dritte Transportelement 163 kann sich mit einer dritten Geschwindigkeit V3 an der Transportbahn 165 bewegen, wobei ein Pfeil die Transportrichtung als Beispiel angibt. Die Geschwindigkeiten V1 bis V3 können je nach Bedarf zumindest zeitweise gleich groß sein. Zumindest zwei der Geschwindigkeiten V1 bis V3 können jedoch auch zumindest zeitweise verschieden groß sein. Die Geschwindigkeiten V1 bis V3 werden selbstverständlich vorzugsweise derart gewählt, dass es nicht zu einer unbeabsichtigten Kollision zwischen zumindest zwei sich nacheinander an der Transportbahn 165 bewegenden Transportelementen 161 bis 163 kommt. Vorzugsweise sind daher die Transportrichtungen der Transportelemente 161 bis 163 gleich. Jedoch können die Transportrichtungen der Transportelemente 161 bis 163 auch zeitweise entgegengesetzt sein.

Das erste Transportelement 161 hat zwei Arme 1611, 1612, wobei an einem freien Ende des ersten Arms 1611 ein Lagerelement 1613 angeordnet ist und an einem freien Ende des zweiten Arms 1612 ein Lagerelement 1614 angeordnet ist. Das erste Lagerelement 1613 und das zweite Lagerelement 1614 bilden eine Lagereinheit 1613, 1614, die insbesondere ein Wälzlager und/oder Gleitlager und/oder Magnetlager aufweisen kann. An dem anderen Ende der Arme 1611, 1612 ist ein erster Abschnitt 161A des ersten Transportelements 161 angeordnet, welcher der Transportbahn 165 zugewandt ist. Der erste Abschnitt 161A des ersten Transportelements 161 ist somit am Innenkreis der Transportbahn 165, insbesondere parallel zu der Achsrichtung der Welle 166, angeordnet. Das erste Transportelement 161 umgreift die Transportbahn 165 an drei Seiten der Transportbahn 165. Somit hat das erste Transportelement 161 im Bereich der Transportbahn 165 einen U-förmigen Querschnitt. Hierbei verbindet ein zweiter Abschnitt 161B des Transportelements 161, der den Boden des U-förmigen Querschnitts bildet, den ersten Abschnitt 161A und einen dritten Abschnitt 161B des ersten Transportelements 161. Der zweite Abschnitt 161B des Transportelements 161 ist in radialer Richtung des Motors 16 angeordnet. Der dritte Abschnitt 161C ist den Transportbahn-Magnetkrafteinheiten 1651 zugewandt. Somit ist der dritte Abschnitt 161C des ersten Transportelements 161 am Außenkreis des Motors 16 oder der Transportbahn-Magnetkrafteinheiten 1651, insbesondere parallel zu der Achsrichtung der Welle 166, angeordnet.

Das zweite Transportelement 162 hat zwei Arme 1621, 1622, wie in Zusammenschau von Fig. 2 und Fig. 3 ersichtlich. Hierbei ist an einem freien Ende des ersten Arms 1621 ein erstes Lagerelement 1623 angeordnet und an einem freien Ende des zweiten Arms 1622 ein zweites Lagerelement 1624 angeordnet. Das erste Lagerelement 1623 und das zweite Lagerelement 1624 bilden eine Lagereinheit 1623, 1624. Ansonsten ist das zweite Transportelement 162 auf die gleiche Weise ausgeführt, wie zuvor für das erste Transportelement 161 beschrieben.

Das dritte Transportelement 163 hat zwei Arme 1631, 1632, wobei an einem freien Ende des ersten Arms 1631 ein erstes Lagerelement 1633 angeordnet ist und an einem freien Ende des zweiten Arms 1632 ein zweites Lagerelement 1634 angeordnet ist, wie ebenfalls in Zusammenschau von Fig. 2 und Fig. 3 ersichtlich. Das erste Lagerelement 1633 und das zweite Lagerelement 1634 bilden eine Lagereinheit 1633, 1634. Ansonsten ist das dritte Transportelement 163 auf die gleiche Weise ausgeführt, wie zuvor für das erste Transportelement 161 beschrieben.

Insgesamt sind somit die Transportelemente 161, 162, 163 jeweils keilförmig ausgebildet. Die Arme 1611, 1612 sind beabstandet voneinander angeordnet, so dass zwischen den Armen 1611, 1612 jeweils ein Arm der anderen Transportelemente 162, 163 angeordnet werden kann, wie in Fig. 2 und Fig. 3 veranschaulicht. Dasselbe gilt für die Arme der Transportelemente 162, 163. Die Arme 1611, 1612 sowie die Arme der Transportelemente 162, 163 können zwischen der Welle 166 und der Transportbahn 165 auch mit Verstrebungen ausgebildet sein, wie in Fig. 2 abgebildet.

Außerdem sind gemäß dem Beispiel von Fig. 2 alle zuvor beschriebenen Lagerelemente in Achsrichtung der Welle 166 nebeneinander an der Welle 166 angeordnet. Somit sind alle Transportelemente 161, 162, 163 des Motors 16 von Fig. 2, insbesondere ausschließlich, an der Welle 166 gelagert.

Wie in Fig. 3 detaillierter als in Fig. 2 dargestellt, ist das erste Transportelement 161 durch einen Spalt 1615 beabstandet von der Transportbahn 165 und deren Transportbahn-Magnetkrafteinheiten 1651 angeordnet. Demzufolge ist das erste Transportelement 161 kontaktlos an der Transportbahn 165 durch die Lagereinheit 1613, 1614 mechanisch gelagert. Anders ausgedrückt, die Lagereinheit 1613, 1614 lagert das erste Transportelement 161 mechanisch derart an der Welle 166, dass das erste Transportelement 161 an der Transportbahn 165 schwebt. Dadurch entsteht bei einer Relativbewegung zwischen dem ersten Transportelement 161 und der Transportbahn 165 keine Reibung zwischen dem ersten Transportelement 161 und der Transportbahn 165. Dasselbe gilt für die Transportelemente 162, 163, auch wenn in Fig. 3 nur ein entsprechender Spalt 1635 für das dritte Transportelement 163 detailliert gezeigt ist.

Somit sind durch die Transportelemente 161 bis 162 die Funktionselemente, wie die Greifer 142 von Fig. 1, usw. auf einer Welle 166 gelagert. Die Transportelemente 161 bis 162 bewegen sich bei entsprechendem Wirken einer Magnetkraft entlang der Transportbahn 165, die mindestens teilweise bogenförmig um die Welle herum angeordnet ist. Die Transportelemente 161, 162, 163 und damit die daran aufgenommenen Funktionselemente sind somit nur an der Welle 166 und unabhängig voneinander gelagert. Hierbei ist das jeweilige Transportelement 161, 162, 163 zumindest teilweise zwischen der Transportbahn 165 und der zugehörigen Lagereinheit des jeweiligen Transportelements 161 angeordnet.

Im Betrieb der Behälterbehandlungsanlage 1 oder des Motors 16 wird ein Verfahren zum Transport von Funktionselementen in einer Behälterbehandlungsanlage 1 zum Behandeln von Behältern 5 ausgeführt, indem die Transportelemente 161, 162, 163 nacheinander und, je nach Bedarf, unabhängig voneinander entlang der Transportbahn 165 zwischen verschiedenen Stationen an der Transportbahn 165 und mittels entlang der Transportbahn 165 angeordneten Transportbahn-Magnetkrafteinheiten 1651 transportiert werden. Dabei können die Transportelemente 161, 162, 163 auch an bestimmten Positionen oder Stationen an der Transportbahn 165 zeitweise angehalten werden.

Vorzugsweise sind die Transportelemente 161, 162, 163 mit einem Schnellverschluss an der Welle 166 befestigbar. Dadurch kann durch Aufstecken weiterer oder weniger als drei Transportelemente 161, 162, 163 die Anzahl der Transportelemente 161, 162, 163 einfach geändert werden.

Somit bildet der Motor 16 einen Linearmotor, der besonders einfach und verschleißarm ausgestaltet ist. Bei dem in Fig. 2 gezeigten Beispiel ist der Motor 16 als Außenläufermotor ausgestaltet.

Bei einer Modifikation des vorliegenden Ausführungsbeispiels ist der Motor 16 als Innenläufermotor ausgestaltet. In diesem Fall ist die Transportbahn 165 am Außenkreis des Motors 16 angeordnet und die Zähne der Transportbahn-Magnetkrafteinheiten 1651 kragen in Richtung der Welle 166 aus. In diesem Fall kann das erste Transportelement 161 an den zugehörigen Armen 1611, 1612 nur als Platte ausgebildet sein, die den Transportbahn-Magnetkrafteinheiten 1651 zugewandt ist. Das zweite und dritte Transportelement 162, 163 kann entsprechend ausgebildet sein. Es ist alternativ möglich, dass zumindest eines des ersten bis dritten Transportelements 161 bis 163 einen L-förmigen Querschnitt hat, bei welchem nur der erste und zweite Abschnitt 161A, 161B vorhanden sind und somit ein Abschnitt des entsprechenden Transportelements 161 bis 163 wenigstens teilweise radial über die Transportbahn-Magnetkrafteinheiten 1651 nach außen auskragt.

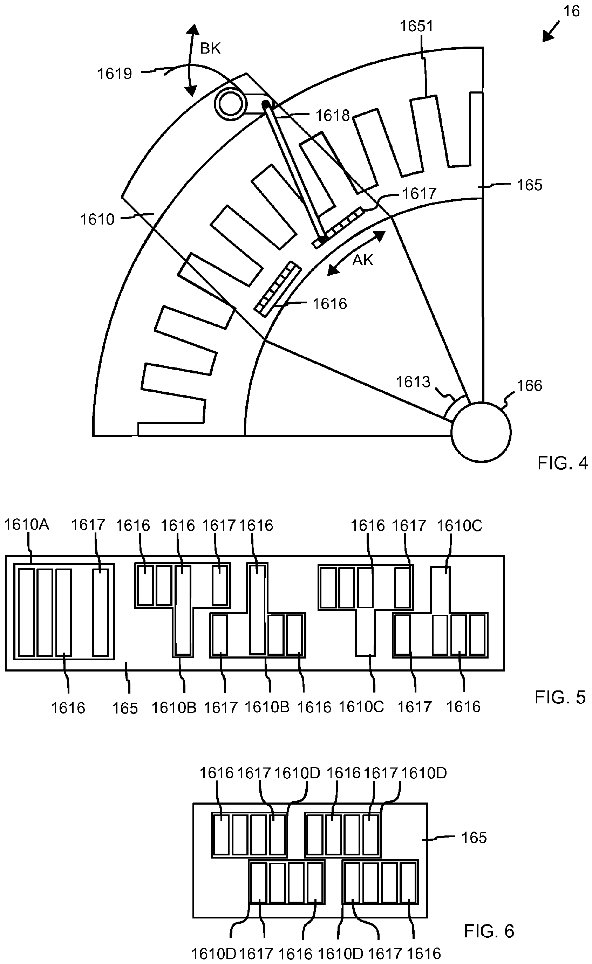

Fig. 4 veranschaulicht den Aufbau eines Transportelements 1610 gemäß einem zweiten Ausführungsbeispiel. Das Transportelement 1610 ist in weiten Teilen auf die gleiche Weise ausgeführt wie das Transportelement 161 oder die Transportelemente 162, 163 gemäß dem ersten Ausführungsbeispiel. Daher sind nachfolgend nur die Unterschiede zu dem ersten Ausführungsbeispiel beschrieben.

Das Transportelement 1610 hat eine Magnetkrafteinheit mit einem ersten Magnetkraftelement 1616 und einem zweiten Magnetkraftelement 1617. Zudem ist ein Kopplungselement 1618 vorgesehen, welches das zweite Magnetkraftelement 1617 mit einem Greiferfinger 1619 als Funktionselement beim oder zum Behandeln von Behältern 5 (Fig. 1) koppelt.

Das erste Magnetkraftelement 1616, das als mindestens ein Permanentmagnet oder magnetisierbares Material ausgeführt sein kann, dient zum Bewegen des Transportelements 1610 relativ zu der Transportbahn 165. Im Unterschied dazu dient das zweite Magnetkraftelement 1616, das als mindestens ein Permanentmagnet oder magnetisierbares Material ausgeführt sein kann, zum Bewegen des Kopplungselements 1618 entlang eines Segments AK an dem Transportelement 1610. Durch die Bewegung wird der Greiferfinger 1619 in einer Bewegungsrichtung BK bewegt.

Für die beschriebenen Bewegungen des Transportelements 1610 und des Greiferfingers 1619 werden die Magnetkraftelemente 1616, 1617 unabhängig voneinander angesteuert. Hierfür werden die bei den jeweiligen die Magnetkraftelementen 1616, 1617 angeordneten Transportbahn-Magnetkrafteinheiten 1651 entsprechend angesteuert.

Die gezeigte Übertragung der Kraft der Transportbahn-Magnetkrafteinheit(en) 1651 von dem Magnetkraftelement 1617 auf den Greiferfinger 1619 ist auf verschiedene Weisen denkbar. Hierfür ist das Kopplungselement 1618 nur ein Beispiel von verschiedenen anderen Versionen. Insbesondere können auch die Magnetkraftelemente 1616, 1617 relativ zueinander verschiebbar sein, um die mechanische Bewegung auszuführen, wie beispielsweise die zuvor beschriebene Bewegung des Greiferfingers 1619.

Beispielsweise kann eine geringe Bewegung des Magnetkraftelements 1617 an der Transportbahn 165 in eine größere Bewegung des Greiferfingers 1619 oder eines sonstigen Funktionselements übersetzt werden.

Zudem ist es auch möglich, dass die Magnetkraftelemente 1616, 1617 abweichend von dem speziellen Beispiel von Fig. 4 unterschiedliche Geometrien haben. Es ist auch denkbar, dass sich die Magnetkraftelemente 1616, 1617 zumindest teilweise überlappen. Zusätzlich oder alternativ zur Überlappung ist ein Höhenversatz zwischen den Magnetkraftelementen 1616, 1617 möglich.

Fig. 5 veranschaulicht drei verschiedene Varianten für eine Ausgestaltung des Transportelements 1610 in Bezug auf die Anordnung der Magnetkrafteinheiten 1616, 1617 an dem Transportelement 1610. Die Magnetkraftelemente 1616 können abwechselnde Polaritäten haben.

Demzufolge sind gemäß einer ersten Variante bei einem Transportelement 1610A alle Magnetkraftelemente 1616, 1617 gleich lang, und zwar in etwa so lang wie die Transportbahn 165 hoch ist. Dadurch hat das Transportelement 1610A im Bereich der Magnetkraftelemente 1616, 1617 eine rechteckige Form.

Bei einer zweiten Variante eines Transportelements 1610B ist dagegen eines der Magnetkraftelemente 1616 in etwa doppelt so lang wie die anderen Magnetkraftelemente 1616, 1617. Dadurch hat das Transportelement 1610B im Bereich der Magnetkraftelemente 1616, 1617 eine rechteckige Form. Zudem sind nebeneinander angeordnete Transportelemente 1610B entgegengesetzt zueinander angeordnet, wodurch die Transportelemente 1610B ineinanderfahren können, wie in Fig. 5 gezeigt. Hierbei ist zwischen den beiden Transportelementen 1610B vorzugsweise ein Abstand einzuhalten, wie in Fig. 5 gezeigt, so dass unerwünscht starke magnetische Wechselwirkungen zwischen den Magnetkraftelementen 1616, 1617 vermieden werden. Die direkt nebeneinander angeordneten Magnetkraftelemente 1617 wechselwirken dann mit derselben Transportbahn-Magnetkrafteinheit 1651. Dadurch ergibt sich die Möglichkeit von sehr geringen Abständen zwischen den einzelnen Transportelementen 1610B. Die Magnetkraftelemente 1616 können abwechselnde Polaritäten haben.

Bei einer dritten Variante eines Transportelements 1610C ist das Transportelement 1610C ebenso T-förmig wie das Transportelement 1610B. Jedoch sind hier alle Magnetkraftelemente 1616, 1617 gleich lang. Dadurch sind alle Magnetkraftelemente 1616, 1617 in etwa nur halb so lang wie die Transportbahn 165 hoch ist. Auch bei dieser Variante sind sehr geringe Abstände zwischen den einzelnen Transportelementen 1610B möglich.

Auch wenn in Fig. 5 jeweils eine Lücke zwischen den Magnetkraftelementen 1616, 1617 dargestellt ist, können die Magnetkraftelemente 1617 auch jeweils direkt neben einem der Magnetkraftelemente 1616 angeordnet sein, soweit sich die Magnetkraftelemente 1616, 1617 nicht gegenseitig beeinflussen. In diesem Fall sind noch geringere Abstände zwischen den einzelnen Transportelementen 1610B möglich als in Fig. 5 gezeigt.

Bei einer vierten Variante eines Transportelements 16100 gemäß Fig. 6 haben die Transportelemente 1610D nur etwa die halbe Höhe der Transportbahn 165. Auch dann ist ein Ineinanderfahren möglich.

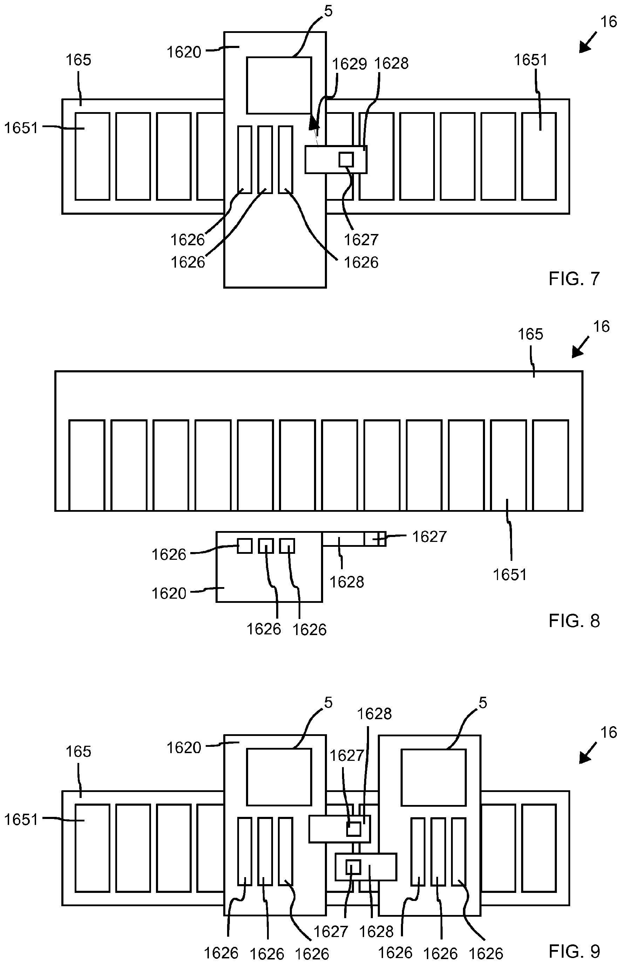

Fig. 7 veranschaulicht den Aufbau eines Transportelements 1620 gemäß einem dritten Ausführungsbeispiel. Hierfür zeigt Fig. 7 sehr schematisch einen Teil des Motors 16 in einer Draufsicht auf die Transportbahn-Magnetkrafteinheiten 1651 am Außenumfang des Motors 16. Fig. 8 zeigt schematisch eine entsprechende Draufsicht von oben auf den Motor 16.

Das Transportelement 1620 ist in weiten Teilen auf die gleiche Weise ausgeführt wie das Transportelement 161 oder die Transportelemente 162, 163 gemäß dem ersten Ausführungsbeispiel. Daher sind nachfolgend nur die Unterschiede zu dem ersten Ausführungsbeispiel beschrieben.

Das Transportelement 1620 hat eine Magnetkrafteinheit mit drei ersten Magnetkraftelementen 1626 und einem zweiten Magnetkraftelement 1627. Das zweite Magnetkraftelement 1627 ist an einem Hebel 1628 angeordnet, welcher schwenkbar am Transportelement 1620 gehalten ist. Der Hebel 1628 kann mit einem hier nur sehr schematisch dargestellten Funktionselement 1629 an dem Transportelement 1620 verbunden sein. Innerhalb des Transportelements 1620 können Getriebe und andere Elemente zur Bewegungsübertragung vorhanden sein, die ebenfalls nicht dargestellt sind.

Durch Bewegung des Hebels 1628 kann beispielsweise ein Artikel, insbesondere ein Behälter 5, usw., vom Transportelement 1620 ausgeworfen werden, indem eine Klammer, die den Artikel hält, mit dem Hebel 1628 geöffnet wird. Der Artikel kann seine Orientierung ändern, indem eine Klammer durch den Hebel 1628 geschwenkt wird. Beispielsweise beim Füllen auf einem Rundläufer kann ein Behälter 5 als der Artikel auf diese Weise "in Richtung der Fliehkraft" geschwenkt werden. Dadurch kann ein Überschwappen von Flüssigkeit vermieden werden.

Für die beschriebenen Bewegungen des Transportelements 1620 und des Hebels 1628 werden die Magnetkraftelemente 1626 unabhängig von dem Magnetkraftelement 1627 angesteuert. Hierfür werden die bei den jeweiligen die Magnetkraftelementen 1626, 1627 angeordneten Transportbahn-Magnetkrafteinheiten 1651 entsprechend angesteuert.

Der Hebel 1628 ist in Transportrichtung entweder nacheilend oder voreilend zum Transportelement 1620 angeordnet.

Der Hebel 1628 kann eine Form aufweisen, die es ermöglicht, dass benachbarte Transportelement(e) 1620 in den Hebel 1628 hineinfahren können.

Gemäß Fig. 9 kann der Hebel 1628, analog zu der Darstellung von Fig. 5, das Magnetfeld der Transportbahn 165 als Stator an einer anderen Seite nutzen, so dass sich andere Transportelemente 1620 nähern können, ohne mit dem Hebel 1628 zu kollidieren. Hierfür weisen die Hebel 1628 einen Höhenversatz oder unterschiedlichen Abstand zur Transportbahn 165 auf, um nicht zu kollidieren, wie zuvor in Bezug auf Fig. 4 beschrieben.

Insgesamt bringt das Transportelement 1620 eine sehr große Flexibilität mit sich. Beispielsweise ist es möglich Behälter 5 dort auszuwerfen, wo es je nach Bedarf oder Wunsch benötigt wird.

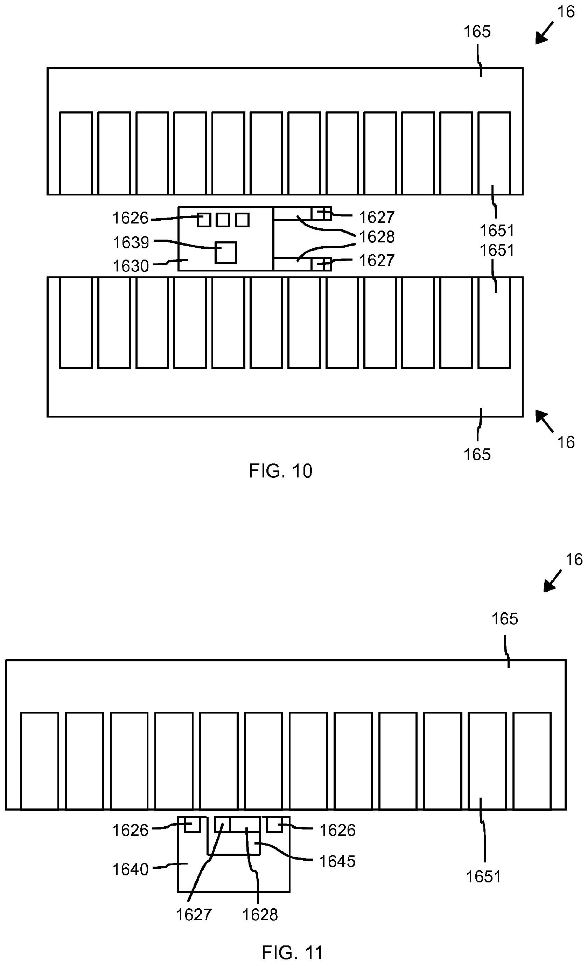

Fig. 10 veranschaulicht den Aufbau eines Transportelements 1630 gemäß einem vierten Ausführungsbeispiel. Das Transportelement 1630 ist in weiten Teilen auf die gleiche Weise ausgeführt wie das Transportelement 1620 gemäß dem vorangehenden Ausführungsbeispiel, jedoch hat das Transportelement 1630 zusätzlich einen zweiten Hebel 1628 mit einem Magnetkraftelement 1627, wobei der zweite Hebel 1628 in gleicher Weise ausgestaltet ist, wie der erste Hebel 1628 mit Magnetkraftelement 1627.

Dadurch kann das Transportelement 1630 bei einer Anordnung zwischen zwei Transportbahnen 165 unterschiedlicher Motoren 16 im sogenannten Doppelkämmbetrieb auf beiden Seiten des Transportelements 1630 Funktionen mit einem Funktionselement ausführen, wie zuvor in Bezug auf die vorangehenden Ausführungsbeispiele beschrieben.

Optional hat das Transportelement 1630 einen Piezo-Motor 1639, über welchen Aktionen mit einem elektrisch betriebenen Arbeitselement oder Funktionselement ausgeführt werden können. Hierfür wird der Piezo-Motor durch Induktion eines elektrischen Stroms von der entsprechenden Transportbahn-Magnetkrafteinheit 1651 angetrieben. Der Strom wird hierbei über einen "Hebel", der nicht beweglich ist, und den Motor 16 induziert. In diesem Fall kann der Hebel auch Teil des Transportelements 1630 selbst sein. Somit kann an dem Transportelement 1630 ein elektrisch betriebenes Arbeitselement angeordnet sein, das induktiv mit elektrischer Energie versorgbar ist. Dadurch wird durch Wechselwirkung mit mindestens einer Transportbahn-Magnetkrafteinheit 1651 elektrische Energie für ein Funktionselement oder Arbeitselement bereitgestellt.

Fig. 11 veranschaulicht den Aufbau eines Transportelements 1640 gemäß einem fünften Ausführungsbeispiel. Das Transportelement 1640 ist in weiten Teilen auf die gleiche Weise ausgeführt wie das Transportelement 1620 gemäß dem dritten Ausführungsbeispiel. Jedoch ist bei dem Transportelement 1640 der Hebel 1828 mit einem Magnetkraftelement 1627 in einer Aussparung 1645 des Transportelements 1640 angeordnet. Die Aussparung 1645 ist bei dem gezeigten Beispiel mittig in dem Transportelement 1640 angeordnet. Selbstverständlich sind jedoch auch Aussparung(en) 1645 außerhalb der Mitte des Transportelements 1640 möglich.

Eine derartige Anordnung ermöglicht eine sehr kompakte und raumsparende Anordnung der Transportelemente 1640 an dem Motor 16.

Alle zuvor beschriebenen Ausgestaltungen der Behälterbehandlungsanlage 1, des Motors 16 und des von diesen ausgeführten Verfahrens können einzeln oder in allen möglichen Kombinationen Verwendung finden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Die Anzahl der Transportelemente 161 bis 163, 1610, 1610A bis 1610C, 1620, 1630, 1640 eines Motors 16 ist beliebig wählbar.

Die Ausgestaltung der Transportelemente 161 bis 163, 1610, 1610A bis 1610C, 1620, 1630, 1640 in der Form muss an einem Motor 16 nicht für alle Transportelemente 161 bis 163, 1610, 1610A bis 1610C, 1620, 1630, 1640 gleich sein.

Der Piezo-Motor 1639 ist bei einem beliebigen der Transportelemente 161 bis 163, 1610, 1610A bis 1610C, 1620, 1630, 1640 vorsehbar.

### Bezugszeichenliste

- 1: Behälterbehandlungsanlage
- 5: Behälter
- 7: Etikett
- 10: Etikettieraggregat
- 11: Palettenkarussell
- 12: Beleimungseinrichtung
- 13: Etikettenbereitstelleinrichtung
- 14: Greiferzylinder
- 20: Transporteinrichtung
- 21: Transportbahn
- 30: Steuereinrichtung
- 111: Palettenkarussellachse
- 112: Palette
- 113: Palettenachse
- 121: Leimwalze
- 122: Leim
- 141: Greiferzylinderachse
- 142: Greifer
- 143: Greiferachse
- 161: erstes Transportelement
- 161A: erster Abschnitt des ersten Transportelements
- 161B: zweiter Abschnitt des ersten Transportelements
- 161C: dritter Abschnitt des ersten Transportelements
- 162: zweites Transportelement
- 163: drittes Transportelement
- 165: Transportbahn
- 166: Welle
- 167: Gestell
- 1610, 1610A bis 1610D: Transportelement
- 1611,1612: Arm
- 1613, 1614: Lagerelement einer Lagereinheit
- 1615: Spalt
- 1616: erstes Magnetkraftelement einer Magnetkrafteinheit
- 1617: zweites Magnetkraftelement einer Magnetkrafteinheit
- 1618: Koppelelement
- 1619: Greiferfinger (Funktionselement)
- 1620: Transportelement
- 1621,1622: Arm
- 1623, 1624: Lagerelement einer Lagereinheit
- 1626: erstes Magnetkraftelement einer Magnetkrafteinheit
- 1627: zweites Magnetkraftelement einer Magnetkrafteinheit
- 1628: Hebel
- 1629: Funktionselement
- 1630: Transportelement
- 1631,1632: Arm
- 1633, 1634: Lagerelement einer Lagereinheit
- 1639: Piezomotor
- 1640: Transportelement
- 1645: Aussparung
- 1651: Transportbahn-Magnetkrafteinheit
- A: erste Rotationsrichtung
- AK: Segment
- B: zweite Rotationsrichtung
- BK: Bewegungsrichtung
- TR: Transportrichtung
- V1: erste Geschwindigkeit
- V2: zweite Geschwindigkeit
- V3: dritte Geschwindigkeit

## Patentansprüche

1. Behälterbehandlungsanlage (1), mit
mindestens zwei Transportelementen (161, 162, 163), die jeweils mindestens ein Funktionselement (1619; 1629) aufweisen, das für ein Behandeln von Behältern (5) vorgesehen ist,
einer Transportbahn (165) zum Transport der mindestens zwei Transportelemente (161, 162, 163) nacheinander und unabhängig voneinander entlang der Transportbahn (165) und mittels entlang der Transportbahn (165) angeordneten Transportbahn-Magnetkrafteinheiten (1651), die zumindest teilweise separat ansteuerbar sind, um mit mindestens einer Magnetkrafteinheit (1616, 1617) des jeweiligen Transportelements (161, 162, 163) zusammenzuwirken, und
einer Lagereinheit (1613, 1614; 1623, 1624; 1633,1634) für jedes Transportelement (161, 162, 163) zum Lagern des Transportelements (161, 162, 163) derart, dass die mindestens zwei Transportelemente (161, 162, 163) an einer gemeinsamen Welle (166) gelagert sind,
**dadurch gekennzeichnet, dass**
jedes Transportelement (161, 162, 163) mit einem ersten Arm (1611, 1621, 1631) und einem zweiten Arm (1612, 1622, 1632) gekoppelt ist, an deren freiem Ende jeweils ein Teil der Lagereinheit (1613, 1614; 1623, 1624; 1633,1634) des Transportelements (161, 162, 163) angeordnet ist.

2. Behälterbehandlungsanlage (1) nach Anspruch 1,
zudem mit der Welle (166) zur Aufnahme der Lagereinheiten (1613, 1614; 1623, 1624; 1633,1634) für alle Transportelemente (161, 162, 163), und/oder
wobei die Transportbahn (165) kreisförmig oder bogenförmig ausgestaltet ist und die Lagereinheiten (1613, 1614; 1623, 1624; 1633,1634) für die mindestens zwei Transportelemente (161, 162, 163) im Zentrum der Transportbahn (165) an der Welle (166) angeordnet sind, und/oder
wobei die Lagereinheit (1613, 1614; 1623, 1624; 1633,1634) ein Wälzlager und/oder ein Gleitlager und/oder Magnetlager aufweist.

3. Behälterbehandlungsanlage (1) nach Anspruch 1 oder 2,
wobei die mindestens zwei Transportelemente (161, 162, 163) mit der Lagereinheit (1613, 1614; 1623, 1624; 1633,1634) kontaktlos an der Transportbahn (166) angeordnet sind, und/oder
wobei jedes Transportelement (161, 162, 163) der Transportbahn (165) an mindestens zwei Seiten kontaktlos zugewandt ist.

4. Behälterbehandlungsanlage (1) nach einem der vorangehenden Ansprüche,
wobei jedes Transportelement (161, 162, 163) an dem ersten Ende eines ersten Arms (1611, 1621, 1631) und an dem ersten Ende eines zweiten Arms (1612, 1622, 1632) angeordnet ist,
wobei an dem zweiten Ende des ersten Arms (1611, 1621, 1631), das das freie Ende des ersten Arms (1611, 1621, 1631) ist, ein erstes Lagerelement (1613; 1623; 1633) der Lagereinheit (1613, 1614; 1623, 1624; 1633,1634) des Transportelements (161, 162, 163) angeordnet ist,
wobei an dem zweiten Ende des zweiten Arms (1612, 1622, 1632), das das freie Ende des zweiten Arms (1612, 1622, 1632) ist, ein zweites Lagerelement (1614; 1624; 1634) der Lagereinheit (1613, 1614; 1623, 1624; 1633,1634) des Transportelements (161, 162, 163) angeordnet ist, und
wobei optional das zweite Ende des ersten Arms (1611, 1621, 1631) und das zweite Ende des zweiten Arms (1612, 1622, 1632) beabstandet voneinander an der gemeinsamen Welle (166) angeordnet sind.

5. Behälterbehandlungsanlage (1) nach einem der vorangehenden Ansprüche, wobei die Arme (1611, 1612; 1621, 1622; 1631, 1632) beabstandet voneinander angeordnet sind, so dass alle ersten Arme (1611, 1621, 1631) für die mindestens zwei Transportelemente an dem freien Ende des ersten Arms (1611, 1621, 1631) in einer Reihe benachbart zueinander an der Welle (166) angeordnet sind.

6. Behälterbehandlungsanlage (1) nach einem der vorangehenden Ansprüche,
wobei die Transportbahn (165) als Transportbahn-Magnetkrafteinheiten (1651) eine Vielzahl von Spulen aufweist, die einzeln ansteuerbar sind, und/oder
zudem mit einer Steuereinrichtung (30) zum Steuern einer Bewegung von mindestens einem Transportelement (161, 163) entlang der Transportbahn (165) mit einer Geschwindigkeit (V1), die zumindest teilweise verschieden von einer Geschwindigkeit (V2) des mindestens einen anderen Transportelements (162) ist.

7. Behälterbehandlungsanlage (1) nach einem der vorangehenden Ansprüche,
wobei die Magnetkrafteinheit (1616, 1617; 1626, 1627) des Transportelements (1610; 1620) ein erstes Magnetkraftelement (1616; 1626) und ein zweites Magnetkraftelement (1617; 1627) aufweist,
wobei das erste Magnetkraftelement (1616; 1626) zum Transport des Transportelements (1610; 1620) entlang der Transportbahn (165) mit mindestens einer Transportbahn-Magnetkrafteinheit (1651) zusammenwirkt, und
wobei das zweite Magnetkraftelement (1617; 1627) unabhängig von dem ersten Magnetkraftelement (1616; 1626) zum Bewegen eines Funktionselements (1619) oder eines Hebels (1628) des Transportelements (1610; 1620) mit mindestens einer weiteren Transportbahn-Magnetkrafteinheit (1651) zusammenwirkt, um eine Betätigung des Funktionselements (1619) oder des Hebels (1628) zu bewirken.

8. Behälterbehandlungsanlage (1) nach Anspruch 7,
wobei das erste Magnetkraftelement (1616; 1626) mindestens einen Permanentmagneten oder magnetisierbares Material aufweist, und
wobei das zweite Magnetkraftelement (1617; 1627) mindestens einen Permanentmagneten oder magnetisierbares Material aufweist.

9. Behälterbehandlungsanlage (1) nach Anspruch 7 oder 8,
wobei der Hebel (1628) schwenkbar an dem Transportelement (1620) gehalten ist und mit dem Funktionselement (1629) an dem Transportelement (1620) verbunden ist, und/oder
wobei der Hebel (1628) in Transportrichtung nacheilend oder voreilend zu dem Transportelement (1620) angeordnet ist, und/oder
wobei der Hebel (1628) derart geformt ist, dass der Hebel (1628) von einem weiteren Transportelement (1620) aufnehmbar ist, das an der Transportbahn (165) benachbart zu dem Transportelement (1620) angeordnet ist.

10. Behälterbehandlungsanlage (1) nach einem der vorangehenden Ansprüche,
wobei das Transportelement (1640) eine Aussparung (1645) aufweist, die in einer Richtung quer zur Transportrichtung (TR) in etwa in der Mitte des Transportelements (1640) angeordnet ist, und/oder
wobei das Transportelement (1630) einen Piezo-Motor (1639) aufweist, der durch Wechselwirkung mit mindestens einer Transportbahn-Magnetkrafteinheit (1651) elektrische Energie für ein Funktionselement bereitstellt.

11. Behälterbehandlungsanlage (1) nach einem der vorangehenden Ansprüche,
wobei die Transportbahn (165) und die mindestens zwei Transportelemente (161, 162, 163) Teil einer Transporteinrichtung (20) sind, und/
wobei das Funktionselement (1619; 1629) ein Behältergreifer der Transporteinrichtung (20) ist.

12. Behälterbehandlungsanlage (1) nach Anspruch 11, wobei der Behältergreifer ein Vakuumsauger oder eine Neckhandlingklammer oder eine Klammer ist, die zum Greifen eines Behälters (5) an deren Hals oder Körper dienen.

13. Behälterbehandlungsanlage (1) nach einem der vorangehenden Ansprüche,
wobei die Transportbahn (165) und die mindestens zwei Transportelemente (161, 162, 163) Teil einer Blasmaschine und/oder einer Ausstattungsmaschine und/oder einer Füllmaschine und/oder einer Inspektionseinheit und/oder einer Markiereinheit und/oder einer Verpackungsmaschine und/oder einer Zuführeinheit für Stückgut wie Vorformlinge oder Verschlüsse sind.

14. Behälterbehandlungsanlage (1) nach einem der vorangehenden Ansprüche,
wobei die Behälterbehandlungsanlage (1) eine Etikettiermaschine (10, 20) hat,
wobei das mindestens eine Funktionselement (1619; 1629) ein Greifer (142) an einem Greiferzylinder (14) oder eine Palette (112) an einem Palettenkarussell (11) ist, und
wobei der Greifer (142) zum Öffnen oder Schließen ausgestaltet ist, um ein Etikett (7) zu greifen oder freizugeben, so dass das Etikett (7) an einem Behälter (5) anbringbar ist.

15. Verfahren zum Transport von Funktionselementen in einer Behälterbehandlungsanlage zum Behandeln von Behältern, indem mindestens zwei Transportelemente (161, 162, 163), die jeweils mindestens ein Funktionselement (1619; 1629) aufweisen, das für ein Behandeln von Behältern (5) vorgesehen ist, nacheinander und unabhängig voneinander entlang der Transportbahn (165) mittels entlang der Transportbahn (165) angeordneten Transportbahn-Magnetkrafteinheiten (1651) transportiert werden, die zumindest teilweise separat ansteuerbar sind, um mit einer Magnetkrafteinheit (1616, 1617) des jeweiligen Transportelements (161, 162, 163) zusammenzuwirken,
wobei jedes Transportelement (161, 162, 163) mit einer Lagereinheit (1613, 1614; 1623, 1624; 1633, 1634) derart gelagert wird, dass die mindestens zwei Transportelemente (161, 162, 163) an einer gemeinsamen Welle (166) gelagert werden,
**dadurch gekennzeichnet, dass** jedes Transportelement (161, 162, 163) mit einem ersten Arm (1611, 1621, 1631) und einem zweiten Arm (1612, 1622, 1632) gekoppelt ist, an deren freiem Ende jeweils ein Teil der Lagereinheit (1613, 1614; 1623, 1624; 1633,1634) des Transportelements (161, 162, 163) angeordnet ist.

## Claims

1. A container-handling installation (1), comprising
at least two conveying elements (161, 162, 163), each having at least one functional element (1619; 1629), which is provided for handling containers (5),
a conveyance path (165) for conveying the at least two conveying elements (161, 162, 163) successively and independently of one another along the conveyance path (165) and by means of conveyance path magnetic force units (1651) which are positioned along the conveyance path (165) and which are at least partially separately controllable in order to interact with at least one magnetic force unit (1616, 1617) of the respective conveying element (161, 162, 163), and
a bearing unit (1613, 1614; 1623, 1624; 1633, 1634) for each conveying element (161, 162, 163) for mounting the conveying element (161, 162, 163) such that the at least two conveying elements (161, 162, 163) are mounted on a common shaft (166),
**characterized in that**
each conveying element (161, 162, 163) is coupled to a first arm (1611, 1621, 1631) and a second arm (1612, 1622, 1632), at the free end of each arm is positioned a part of the bearing unit (1613, 1614; 1623, 1624; 1633, 1634) of the conveying element (161, 162, 163).

2. The container-handling installation (1) according to claim 1,
further comprising the shaft (166) for receiving the bearing units (1613, 1614; 1623, 1624; 1633, 1634) for all conveying elements (161, 162, 163), and / or
wherein the conveyance path (165) is configured circular or arcuate and the bearing units (1613, 1614; 1623, 1624; 1633, 1634) for the at least two conveying elements (161, 162, 163) are positioned in the center of the conveyance path (165) on the shaft (166), and / or
wherein the bearing unit (1613, 1614; 1623, 1624; 1633, 1634) comprises a rolling bearing and / or a slide bearing and / or magnetic bearing.

3. The container-handling installation (1) according to claim 1 or 2,
wherein the at least two conveying elements (161, 162, 163) are positioned in noncontact with the bearing unit (1613, 1614; 1623, 1624; 1633, 1634) on the conveyance path (166), and / or
wherein each conveying element (161, 162, 163) is faced in noncontact to the conveyance path (165) on at least two sides.

4. The container-handling installation (1) according to any one of the preceding claims,
wherein each conveying element (161, 162, 163) is positioned at the first end of a first arm (1611, 1621, 1631) and at the first end of a second arm (1612, 1622, 1632),
wherein a first bearing element (1613; 1623; 1633) of the bearing unit (1613, 1614; 1623, 1624; 1633, 1634) of the conveying element (161, 162, 163) is positioned at the second end of the first arm (1611, 1621, 1631) which is the free end of the first arm (1611, 1621, 1631),
wherein a second bearing element (1614; 1624; 1634) of the bearing unit (1613, 1614; 1623, 1624; 1633, 1634) of the conveying element (161, 162, 163) is positioned at the second end of the second arm (1612, 1622, 1632) which is the free end of the second arm (1612, 1622, 1632), and
wherein optionally the second end of the first arm (1611, 1621, 1631) and the second end of the second arm (1612, 1622, 1632) are positioned spaced from each other at the common shaft (166).

5. The container-handling installation (1) according to any one of the preceding claims, wherein the arms (1611, 1612; 1621, 1622; 1631, 1632) are spaced apart from each other, so that all first arms (1611, 1621, 1631) for the at least two conveying elements are positioned on the free end of the first arm (1611, 1621, 1631) in a row adjacent to each other on the shaft (166).

6. The container-handling installation (1) according to any one of the preceding claims,
wherein the conveyance path (165) comprises as conveyance path magnetic force units (1651) a plurality of coils which are individually controllable, and / or
further comprising a control device (30) for controlling a movement of at least one conveying element (161, 163) along the conveyance path (165) at a speed (V1) that is at least partially different from a speed (V2) of the at least one other conveying element (162).

7. The container-handling installation (1) according to any one of the preceding claims,
wherein the magnetic force unit (1616, 1617; 1626, 1627) of the conveying element (1610; 1620) comprises a first magnetic force element (1616; 1626) and a second magnetic force element (1617; 1627),
wherein the first magnetic force element (1616; 1626) interacts with at least one conveyance path magnetic force unit (1651) to convey the conveying element (1610; 1620) along the conveyance path (165), and
wherein the second magnetic force element (1617; 1627) interacts with at least one other conveyance path magnetic force unit (1651) independent from the first magnetic force element (1616; 1626) for moving a functional element (1619) or a lever (1628) of the conveying element (1610; 1620), to effect an actuation of the functional element (1619) or the lever (1628).

8. The container-handling installation (1) according to claim 7,
wherein the first magnetic force element (1616; 1626) comprises at least one permanent magnet or magnetizable material, and
wherein the second magnetic force element (1617; 1627) comprises at least one permanent magnet or magnetizable material.

9. The container-handling installation (1) according to claim 7 or 8,
wherein the lever (1628) is pivotally supported on the conveying element (1620) and is connected to the functional element (1629) on the conveying element (1620), and / or
wherein the lever (1628) is positioned in the conveying direction lagging or leading to the conveying element (1620), and / or
wherein the lever (1628) is shaped such that the lever (1628) is receivable by another conveying element (1620) which is positioned adjacent to the conveying element (1620) on the conveyance path (165).

10. The container-handling installation (1) according to any one of the preceding claims,
wherein the conveying element (1640) comprises a recess (1645) which is positioned in a direction transverse to the conveying direction (TR) approximately in the center of the conveying element (1640), and / or
wherein the conveying element (1630) comprises a piezo motor (1639) which provides electrical energy for a functional element by interaction with at least one conveyance path magnetic force unit (1651).

11. The container-handling installation (10) according to any one of the preceding claims,
wherein the conveyance path (165) and the at least two conveying elements (161, 162, 163) are part of a conveying device (20), and
wherein the functional element (1619; 1629) is a container gripper of the conveying device (20).

12. The container-handling installation (10) according to claim 11, wherein the container gripper is a vacuum suction device or a neck handling clamp or a clamp which serves for gripping a container (5) at its neck or body.

13. The container-handling installation (10) according to any one of the preceding claims,
wherein the conveyance path (165) and the at least two conveying elements (161, 162, 163) are part of a blow molding machine and / or an equipment machine and / or a filling machine and / or an inspection unit and / or a marking unit and / or a packaging machine and / or a supplying unit for piece goods such as preforms or closures.

14. The container-handling installation (10) according to any one of the preceding claims,
wherein the container-handling installation (10) comprises a labeling machine (10, 20),
wherein the at least one functional element (1619; 1629) is a gripper (142) at a gripper cylinder (14) or a pallet (112) on a pallet carousel (11), and
wherein the gripper (142) is configured for opening or closing to grip or release a label (7), so that the label (7) is attachable to a container (5).

15. A method for conveying functional elements in a container-handling installation for handling containers, in which at least two conveying elements (161, 162, 163) each having at least one functional element (1619; 1629) provided for handling containers (5) are conveyed one after the other and independently of one another along the conveyance path (165) by means of conveyance path magnetic force units (1651) which are positioned along the conveyance path (165) and which are at least partially separately controllable in order to interact with one magnetic force unit (1616, 1617) of the respective conveying element (161, 162, 163),
wherein each conveying element (161, 162, 163) is mounted with a bearing unit (1613, 1614; 1623, 1624; 1633, 1634) such that the at least two conveying elements (161, 162, 163) are mounted on a common shaft (166),
**characterized in that**
each conveying element (161, 162, 163) is coupled to a first arm (1611, 1621, 1631) and a second arm (1612, 1622, 1632), at the free end of each arm is positioned a part of the bearing unit (1613, 1614; 1623, 1624; 1633, 1634) of the conveying element (161, 162, 163).

## Revendications

1. Installation de manipulation de récipients (1), comprenant
au moins deux éléments de transport (161, 162, 163), ayant chacun au moins un élément fonctionnel (1619; 1629), qui est fourni pour manipuler des récipients (5),
une trajectoire de transport (165) pour transporter les au moins deux éléments de transport (161, 162, 163) successivement et indépendamment l'un de l'autre le long de la trajectoire de transport (165) et au moyen d'unités à force magnétique de trajectoire de transport (1651) qui sont positionnées le long de la trajectoire de transport (165) et qui peuvent être au moins partiellement séparément contrôlées afin d'interagir avec au moins une unité à force magnétique (1616, 1617) de l'élément de transport respectif (161, 162, 163), et
une unité de palier (1613, 1614; 1623, 1624; 1633, 1634) pour chaque élément de transport (161, 162, 163) pour un montage de l'élément de transport (161, 162, 163) de sorte que les au moins deux éléments de transport (161, 162, 163) sont montés sur un arbre commun (166),
**caractérisée en ce que**
chaque élément de transport (161, 162, 163) est couplé à un premier bras (1611, 1621, 1631) et un second bras (1612, 1622, 1632), à l'extrémité libre de chaque bras est positionnée une partie de l'unité de palier (1613, 1614; 1623, 1624; 1633, 1634) de l'élément de transport (161, 162, 163).

2. Installation de manipulation de récipients (1) selon la revendication 1,
comprenant de plus l'arbre (166) pour recevoir les unités de palier (1613, 1614; 1623, 1624; 1633, 1634) pour tous les éléments de transport (161, 162, 163), et/ou
dans laquelle la trajectoire de transport (165) est de configuration circulaire ou arquée et les unités de palier (1613, 1614; 1623, 1624; 1633, 1634) pour les au moins deux éléments de transport (161, 162, 163) sont positionnées au centre de la trajectoire de transport (165) sur l'arbre (166), et/ou
dans laquelle l'unité de palier (1613, 1614; 1623, 1624; 1633, 1634) comprend un palier à roulement et/ou un palier coulissant et/ou un palier magnétique.

3. Installation de manipulation de récipients (1) selon la revendication 1 ou 2,
dans laquelle les au moins deux éléments de transport (161, 162, 163) sont positionnés sans contact avec l'unité de palier (1613, 1614; 1623, 1624; 1633, 1634) sur la trajectoire de transport (166), et/ou
dans laquelle chaque élément de transport (161, 162, 163) est opposé sans contact à la trajectoire de transport (165) sur au moins deux côtés.

4. Installation de manipulation de récipients (1) selon l'une quelconque des revendications précédentes,
dans laquelle chaque élément de transport (161, 162, 163) est positionné à la première extrémité d'un premier bras (1611, 1621, 1631) et à la première extrémité d'un second bras (1612, 1622, 1632),
dans laquelle un premier élément de palier (1613; 1623; 1633) de l'unité de palier (1613, 1614; 1623, 1624; 1633, 1634) de l'élément de transport (161, 162, 163) est positionné à la seconde extrémité du premier bras (1611, 1621, 1631) qui est l'extrémité libre du premier bras (1611, 1621, 1631),
dans laquelle un second élément de palier (1614; 1624; 1634) de l'unité de palier (1613, 1614; 1623, 1624; 1633, 1634) de l'élément de transport (161, 162, 163) est positionné à la seconde extrémité du second bras (1612, 1622, 1632) qui est l'extrémité libre du second bras (1612, 1622, 1632), et
dans laquelle éventuellement la seconde extrémité du premier bras (1611, 1621, 1631) et la seconde extrémité du second bras (1612, 1622, 1632) sont positionnées de manière espacée l'une de l'autre sur l'arbre commun (166).

5. Installation de manipulation de récipients (1) selon l'une quelconque des revendications précédentes, dans laquelle les bras (1611, 1612; 1621, 1622; 1631, 1632) sont espacés les uns des autres, de sorte que tous les premiers bras (1611, 1621, 1631) pour les au moins deux éléments de transport sont positionnés sur l'extrémité libre du premier bras (1611, 1621, 1631) dans une rangée adjacents les uns aux autres sur l'arbre (166).

6. Installation de manipulation de récipients (1) selon l'une quelconque des revendications précédentes,
dans laquelle la trajectoire de transport (165) comprend comme unités à force magnétique de trajectoire de transport (1651) plusieurs bobines qui peuvent être contrôlées individuellement, et/ou
comprenant de plus un dispositif de contrôle (30) pour contrôler un mouvement d'au moins un élément de transport (161, 163) le long de la trajectoire de transport (165) à une vitesse (V1) qui est au moins partiellement différente d'une vitesse (V2) du au moins un autre élément de transport (162).

7. Installation de manipulation de récipients (1) selon l'une quelconque des revendications précédentes,
dans laquelle l'unité à force magnétique (1616, 1617; 1626, 1627) de l'élément de transport (1610; 1620) comprend un premier élément à force magnétique (1616; 1626) et un second élément à force magnétique (1617; 1627),
dans laquelle le premier élément à force magnétique (1616; 1626) interagit avec au moins une unité à force magnétique de trajectoire de transport (1651) pour transporter l'élément de transport (1610; 1620) le long de la trajectoire de transport (165), et
dans laquelle le second élément à force magnétique (1617; 1627) interagit avec au moins une autre unité à force magnétique de trajectoire de transport (1651) indépendante du premier élément à force magnétique (1616; 1626) pour déplacer un élément fonctionnel (1619) ou un levier (1628) de l'élément de transport (1610; 1620), pour réaliser un actionnement de l'élément fonctionnel (1619) ou du levier (1628).

8. Installation de manipulation de récipients (1) selon la revendication 7,
dans laquelle le premier élément à force magnétique (1616; 1626) comprend au moins un aimant permanent ou matériau magnétisable, et
dans laquelle le second élément à force magnétique (1617; 1627) comprend au moins un aimant permanent ou matériau magnétisable.

9. Installation de manipulation de récipients (1) selon la revendication 7 ou 8,
dans laquelle le levier (1628) est supporté en pouvant pivoter sur l'élément de transport (1620) et est connecté à l'élément fonctionnel (1629) sur l'élément de transport (1620), et/ou
dans laquelle le levier (1628) est positionné dans la direction de transport en retard ou en avance de l'élément de transport (1620), et/ou
dans laquelle le levier (1628) est façonné de sorte que le levier (1628) est recevable par un autre élément de transport (1620) qui est positionné à côté de l'élément de transport (1620) sur la trajectoire de transport (165).

10. Installation de manipulation de récipients (1) selon l'une quelconque des revendications précédentes,
dans laquelle l'élément de transport (1640) comprend une cavité (1645) qui est positionnée dans une direction transversale à la direction de transport (TR) approximativement au centre de l'élément de transport (1640), et/ou
dans laquelle l'élément de transport (1630) comprend un moteur piézo (1639) qui fournit de l'énergie électrique à un élément fonctionnel par interaction avec au moins une unité à force magnétique de trajectoire de transport (1651).

11. Installation de manipulation de récipients (10) selon l'une quelconque des revendications précédentes,
dans laquelle la trajectoire de transport (165) et les au moins deux éléments de transport (161, 162, 163) font partie d'un dispositif de transport (20), et
dans laquelle l'élément fonctionnel (1619; 1629) est un préhenseur de récipient du dispositif de transport (20).

12. Installation de manipulation de récipients (10) selon la revendication 11, dans laquelle le préhenseur de récipient est un dispositif d'aspiration sous vide ou une pince pour manipuler un goulot ou une pince qui sert à la préhension d'un récipient (5) à son goulot ou corps.

13. Installation de manipulation de récipients (10) selon l'une quelconque des revendications précédentes,
dans laquelle la trajectoire de transport (165) et les au moins deux éléments de transport (161, 162, 163) font partie d'une machine de moulage par soufflage et/ou une machine d'équipement et/ou une machine de remplissage et/ou une unité d'inspection et/ou une unité de marquage et/ou une machine d'emballage et/ou une unité d'alimentation pour des articles en pièces tels que des préformes ou fermetures.

14. Installation de manipulation de récipients (10) selon l'une quelconque des revendications précédentes,
dans laquelle l'installation de manipulation de récipients (10) comprend une machine d'étiquetage (10, 20),
dans laquelle le au moins un élément fonctionnel (1619; 1629) est un préhenseur (142) sur un cylindre de préhenseur (14) ou une palette (112) sur un carrousel de palettes (11), et
dans laquelle le préhenseur (142) est configuré pour l'ouverture ou fermeture pour prendre ou libérer une étiquette (7), de sorte que l'étiquette (7) peut être fixée à un récipient (5).

15. Procédé pour transporter des éléments fonctionnels dans une installation de manipulation de récipients pour manipuler des récipients, dans lequel au moins deux éléments de transport (161, 162, 163) ayant chacun au moins un élément fonctionnel (1619; 1629) fourni pour manipuler des récipients (5) sont transportés l'un après l'autre et indépendamment l'un de l'autre le long de la trajectoire de transport (165) au moyen d'unités à force magnétique de trajectoire de transport (1651) qui sont positionnées le long de la trajectoire de transport (165) et qui peuvent être au moins partiellement séparément contrôlées afin d'interagir avec une unité à force magnétique (1616, 1617) de l'élément de transport respectif (161, 162, 163),
dans lequel chaque élément de transport (161, 162, 163) est monté avec une unité de palier (1613, 1614; 1623, 1624; 1633, 1634) de sorte que les au moins deux éléments de transport (161, 162, 163) sont montés sur un arbre commun (166),
**caractérisé en ce que**
chaque élément de transport (161, 162, 163) est couplé à un premier bras (1611, 1621, 1631) et un second bras (1612, 1622, 1632), à l'extrémité libre de chaque bras est positionnée une partie de l'unité de palier (1613, 1614; 1623, 1624; 1633, 1634) de l'élément de transport (161, 162, 163).
